# EUROPEAN PATENT APPLICATION

(11) **EP 4 092 925 A1**
(43) Date of publication of application: **23.11.2022**
(21) Application number: 20918264.1
(22) Date of filing: 10.02.2020
(51) Int. Cl.: H04B 7/06

(54) **DATA TRANSMISSION METHOD AND APPARATUS**

(71) Applicant: Huawei Technologies Co., Ltd., Shenzhen, Guangdong 518129, (CN)
(72) Inventor: LI, Xiang, Shenzhen, Guangdong 518129 (CN); DAI, Xizeng, Shenzhen, Guangdong 518129 (CN)
(74) Representative: Pfenning, Meinig & Partner mbB
(86) International application number: PCT/CN2020/074670
(87) International publication number: WO 2021/159258

(57) **Abstract**

This application discloses a data transmission method and apparatus, to improve data transmission accuracy. The method includes: receiving indication information for indicating quasi co-location information of a control channel or a data channel, where the quasi co-location information indicates that the control channel or the data channel has a quasi co-location relationship with a plurality of reference signals; performing Doppler shift estimation based on the quasi co-location information for the plurality of reference signals, to obtain a comprehensive Doppler shift estimation result; and demodulating a control channel or a data channel from a plurality of network devices based on the comprehensive Doppler shift estimation result. The quasi co-location information is associated with the plurality of reference signals, that is, there is a quasi co-location relationship between the data channel or the control channel and the plurality of reference signals, so that a terminal device can estimate accurate channel information and a Doppler shift based on the plurality of reference signals when there is a multipath signal, thereby improving channel estimation precision.

## Description

### TECHNICAL FIELD

This application relates to the field of communication technologies, and in particular, to a data transmission method and apparatus.

### BACKGROUND

Currently, a wireless coverage technology mainly has three networking modes: a single frequency network (single frequency network, SFN), a dual-band network, and a multiband network. The single frequency network may use a same frequency at a same time to perform signal coverage within a specific coverage area, thereby reducing a quantity of user equipment (user equipment, UE) handovers. In long-term evolution (long-term evolution, LTE), in single frequency networking, a plurality of remote radio heads (remote radio heads, RRHs) may be connected to one base band unit (base band unit, BBU). The plurality of RRHs use a same cell identifier (Cell ID). All RRHs connected to one BBU jointly send data to one UE, and the UE simultaneously receives common reference signals (cell-specific reference signals, CRSs) from the plurality of RRHs. When a quantity of transmit antenna ports of the RRH is fixed, corresponding CRS resources are fixed.

In LTE, all RRHs connected to one BBU jointly send data to one UE, and the UE simultaneously receives same CRSs from the plurality of RRHs. In some high-speed mobility scenarios, for example, on a high-speed railway or on a bullet train, when UE uses CRSs to perform Doppler spectrum estimation, a multipath signal is generated when the CRSs sent by all RRHs connected to one BBU arrive at the UE because the CRSs occupy a same time-frequency resource at a fixed location. As a result, a Doppler spread problem occurs, and the UE cannot properly determine a center frequency for downlink synchronization. This reduces accuracy of receiving data.

### SUMMARY

This application provides a data transmission method and apparatus, a chip, a computer-readable storage medium, a computer program product, and the like, to improve data transmission accuracy.

According to a first aspect, an embodiment of this application provides a data transmission method. The method may be applied to a terminal device, or a chip or a chipset in a terminal device. The method includes: receiving indication information, where the indication information indicates quasi co-location information of a control channel or a data channel, and the quasi co-location information indicates that the control channel or the data channel has a quasi co-location relationship with a plurality of reference signals; receiving a control channel or a data channel from a plurality of network devices; performing Doppler shift estimation based on the quasi co-location information for the plurality of reference signals, to obtain a comprehensive Doppler shift estimation result; and demodulating the control channel or the data channel based on the comprehensive Doppler shift estimation result.

In this embodiment of this application, the quasi co-location information is associated with the plurality of reference signals, that is, there is the quasi co-location relationship between the data channel (or the control channel) and the plurality of reference signals, so that the terminal device can estimate accurate channel information and a Doppler shift based on the plurality of reference signals when there is a multipath signal, thereby improving channel estimation precision, for example, precision of a time-domain difference of channel estimation, to improve receiving performance.

In a possible design, when Doppler shift estimation is performed based on the quasi co-location information for the plurality of reference signals, Doppler shift estimation may be separately performed on the plurality of reference signals based on the quasi co-location information, to obtain Doppler shift estimation results that respectively correspond to the plurality of reference signals. The Doppler shift estimation results that correspond to the plurality of reference signals are combined to obtain the comprehensive Doppler shift estimation result.

In the foregoing design, the Doppler shift estimation results corresponding to the plurality of reference signals may be combined, to obtain an accurate comprehensive Doppler shift estimation result. This can improve channel estimation precision.

In a possible design, the indication information may include one piece of configuration information indicating the quasi co-location information. The configuration information includes a reference signal list. The reference signal list includes identifiers of the plurality of reference signals. In the foregoing design, the reference signal list in the configuration information may carry the identifiers of the plurality of reference signals, so that there is the quasi co-location relationship between the data channel (or the control channel) and the plurality of reference signals.

In a possible design, the indication information includes a plurality of pieces of configuration information indicating the quasi co-location information. The plurality of pieces of configuration information are one-to-one associated with the plurality of reference signals. In the foregoing design, the indication information includes the plurality of pieces of configuration information that are associated with different reference signals and that indicate same quasi co-location information, so that there is the quasi co-location relationship between the data channel (or the control channel) and the plurality of reference signals.

In a possible design, the plurality of reference signals may include at least one of the following: a tracking reference signal (CSI-RS for tracking, TRS) and a synchronization signal/broadcast channel block (synchronization signal/PBCH block, SSB).

According to a second aspect, an embodiment of this application provides a data transmission method. The method may be applied to a network device, or a chip or a chipset in a network device. The method includes: sending indication information, where the indication information indicates quasi co-location information of a control channel or a data channel, and the quasi co-location information indicates that the control channel or the data channel has a quasi co-location relationship with a plurality of reference signals; and sending a control channel or a data channel to a terminal device based on the quasi co-location information.

In this embodiment of this application, the quasi co-location information is associated with the plurality of reference signals, that is, there is the quasi co-location relationship between the data channel (or the control channel) and the plurality of reference signals, so that the terminal device can estimate accurate channel information and a Doppler shift based on the plurality of reference signals when there is a multipath signal, thereby improving channel estimation precision, for example, precision of a time-domain difference of channel estimation, to improve receiving performance.

In a possible design, configuration information of the quasi co-location information includes a reference signal list. The reference signal list includes identifiers of the plurality of reference signals. In the foregoing design, the reference signal list in the configuration information may carry identifiers of the plurality of reference signals, so that there is the quasi co-location relationship between the data channel (or the control channel) and the plurality of reference signals.

In a possible design, the indication information includes a plurality of pieces of configuration information indicating the quasi co-location information. The plurality of pieces of configuration information are one-to-one associated with the plurality of reference signals. In the foregoing design, the indication information includes the plurality of pieces of configuration information that are associated with different reference signals and that indicate same quasi co-location information, so that there is the quasi co-location relationship between the data channel (or the control channel) and the plurality of reference signals.

In a possible design, the plurality of reference signals may include at least one of the following: a TRS and an SSB.

According to a third aspect, an embodiment of this application provides a data transmission method. The method may be applied to a terminal device, or a chip or a chipset in a terminal device. The method includes: receiving first information, where the first information is used to activate one TCI state, and the TCI state is associated with one TRS resource; receiving a TRS from a first radio remote head RRH, where the first RRH is an RRH that currently provides a service in a plurality of RRHs connected to a same baseband processing unit BBU, and the TRS is a TRS corresponding to the TRS resource; and performing, based on the TRS, at least one of the following: channel estimation and Doppler shift estimation. In Embodiment 2, the terminal device needs to track only one TCI state at a moment, that is, activate only one TCI state for the terminal device. This can reduce implementation complexity.

In a possible design, second information from the first RRH is received. The second information is used to indicate switching from the first RRH to a second RRH. The first RRH is switched to the second RRH

In a possible design, before the second information from the first RRH is received, the method further includes: separately performing signal quality measurement on reference signals sent by the plurality of RRHs, to obtain measurement values that respectively correspond to the plurality of RRHs; and reporting the measurement values that respectively correspond to the plurality of RRHs to the first RRH

In a possible design, before the first RRH is switched to the second RRH, the method further includes: receiving data from the first RRH based on a result obtained by performing, based on the TRS, at least one of the following: channel estimation and Doppler shift estimation.

According to a fourth aspect, an embodiment of this application provides a data transmission method. The method may be applied to a terminal device, or a chip or a chipset in a terminal device. The method includes: receiving first information, where the first information is used to activate a first TCI state and a second TCI state; receiving a first TRS from a first RRH and a second TRS from a second RRH, where the first RRH is an RRH that currently provides a service in a plurality of RRHs connected to a same baseband processing unit BBU, the first TRS is a TRS corresponding to the first TCI state, and the second TRS is a TRS corresponding to the second TCI state; and performing, based on the first TRS, at least one of the following: channel estimation and Doppler shift estimation; or after switching from the first RRH to the second RRH, performing, based on the second TRS, at least one of the following: channel estimation and Doppler shift estimation.

In this embodiment of this application, the data channel and the control channel may use a same TCI state, or may use different TCI states. If the data channel and the control channel use the same TCI state, a new TCI state to which the control channel is switched may be indicated by using a MAC-CE. The TCI state may be applicable to the data channel and the control channel. In this implementation, two TRSs associated with different TCI states may be configured. If the data channel and the control channel use different TCI states, the TCI state of the control channel may remain unchanged, and the TCI state of the data channel is dynamically indicated based on DCI by using a specific RRH that provides a service.

In addition, in different coverage areas, the terminal device can obtain accurate Doppler shift information based on different TCI states, so that a Doppler spread problem caused by a multipath can be avoided, and a Doppler shift can be accurately estimated and corrected. Therefore, in a high-speed movement process, UE can accurately lock a beam for receiving and sending data, thereby improving receiving performance. In addition, in Embodiment 3, the terminal device simultaneously tracks two or more TCI states, so that when the terminal device switches between TCI states, a time for activating a new TCI state can be reduced. This can avoid interruption of data transmission to some extent.

In a possible design, before the first RRH is switched to the second RRH, the method further includes: receiving second information from the first RRH. The second information is used to indicate switching from the first RRH to the second RRH

In a possible design, before the second information from the first RRH is received, the method further includes: separately performing signal quality measurement on reference signals sent by the plurality of RRHs, to obtain measurement values that respectively correspond to the plurality of RRHs; and reporting the measurement values that respectively correspond to the plurality of RRHs to the first RRH

In a possible design, after the performing, based on the first TRS, at least one of the following: channel estimation and Doppler shift estimation, the method further includes: receiving data from the first RRH based on a result obtained by performing, based on the first TRS, at least one of the following: channel estimation and Doppler shift estimation.

In a possible design, after the performing, based on the second TRS, at least one of the following: channel estimation and Doppler shift estimation, the method further includes: receiving data from the second RRH based on a result obtained by performing, based on the second TRS, at least one of the following: channel estimation and Doppler shift estimation.

According to a fifth aspect, this application provides a data transmission apparatus. The apparatus may be a communication device, or may be a chip or a chipset in the communication device. The communication device may be a terminal device, or may be a network device. The apparatus may include a processing module and a transceiver module. When the apparatus is a communication device, the processing module may be a processor, and the transceiver module may be a transceiver. The apparatus may further include a storage module, and the storage module may be a memory. The storage module is configured to store instructions, and the processing module executes the instructions stored in the storage module, so that the terminal device performs a corresponding function in the first aspect, the third aspect, or the fourth aspect, or the processing module executes the instructions stored in the storage module, so that the network device performs the corresponding function in the second aspect. When the apparatus is a chip or a chipset in the communication device, the processing module may be a processor or a processing circuit, and the transceiver module may be an input/output interface, a pin, a circuit, or the like. The processing module executes instructions stored in a storage module, so that the terminal device performs a corresponding function in the first aspect, the third aspect, or the fourth aspect, or the processing module executes instructions stored in a storage module, so that the network device performs a corresponding function in the second aspect. The storage module may be a storage module (for example, a register or a cache) in the chip or the chipset, or may be a storage module (for example, a read-only memory or a random access memory) that is in the base station and that is located outside the chip or the chipset.

According to a sixth aspect, a communication apparatus is provided, including a processor, a communication interface, and a memory. The communication interface is configured to transmit information, and/or a message, and/or data between the apparatus and another apparatus. The memory is configured to store a computer-executable instruction. When the apparatus runs, the processor executes the computer-executable instruction stored in the memory, so that the apparatus is enabled to perform the method according to any one of the first aspect or the designs of the first aspect, any one of the second aspect or the designs of the second aspect, any one of the third aspect or the designs of the third aspect, or any one of the fourth aspect or the designs of the fourth aspect.

According to a seventh aspect, an embodiment of this application provides a computer storage medium. The computer storage medium stores program instructions. When the program instructions are run on a communication device, the communication device is enabled to perform the method according to any one of the first aspect or the possible designs of the first aspect, any one of the second aspect or the possible designs of the second aspect, any one of the third aspect or the designs of the third aspect, or any one of the fourth aspect or the designs of the fourth aspect in embodiments of this application.

According to an eighth aspect, an embodiment of this application provides a computer program product. When the computer program product runs on a communication device, the communication device is enabled to perform the method according to any one of the first aspect or the possible designs of the first aspect, any one of the second aspect or the possible designs of the second aspect, any one of the third aspect or the designs of the third aspect, or any one of the fourth aspect or the designs of the fourth aspect in embodiments of this application.

According to a ninth aspect, an embodiment of this application provides a chip. The chip is coupled to a memory, and performs the method according to any one of the first aspect or the possible designs of the first aspect, any one of the second aspect or the possible designs of the second aspect, any one of the third aspect or the designs of the third aspect, or any one of the fourth aspect or the designs of the fourth aspect in embodiments of this application.

According to a tenth aspect, an embodiment of this application provides a chip, including a communication interface and at least one processor. The communication interface is configured to output and/or input a signal, or is configured to receive computer program code or instructions and transmit the computer program code or the instructions to the processor. The processor runs the computer program code to perform the method according to any one of the first aspect and the designs of the first aspect or any one of the second aspect and the possible designs of the second aspect in embodiments of this application.

It should be noted that "coupling" in embodiments of this application indicates a direct combination or an indirect combination of two components.

### BRIEF DESCRIPTION OF DRAWINGS

FIG. 1 is a schematic diagram of an architecture of a communication system according to an embodiment of this application;
FIG. 2 is a schematic diagram of data transmission in SFN networking according to an embodiment of this application;
FIG. 3 is a flowchart of a data transmission method according to an embodiment of this application;
FIG. 4 is a schematic diagram of a data transmission process according to an embodiment of this application;
FIG. 5 is a schematic diagram of another data transmission process according to an embodiment of this application;
FIG. 6 is a schematic diagram of another data transmission process according to an embodiment of this application;
FIG. 7 is a schematic diagram of another data transmission process according to an embodiment of this application;
FIG. 8 is a schematic diagram of an architecture of a data transmission apparatus according to an embodiment of this application; and
FIG. 9 is a schematic diagram of an architecture of a data transmission apparatus according to an embodiment of this application.

### DESCRIPTION OF EMBODIMENTS

To facilitate understanding of embodiments of this application, the following describes terms related to embodiments of this application.

### 1. Quasi co-location (quasi co-location, QCL):

Quasi co-location may also be referred to as quasi co-site or co-location.

Signals corresponding to antenna ports having a QCL relationship may have a same or similar spatial characteristic parameter (or referred to as a parameter), or a spatial characteristic parameter (or referred to as a parameter) of one antenna port may be used to determine a spatial characteristic parameter (or referred to as a parameter) of another antenna port that has a QCL relationship with the antenna port, or two antenna ports have a same or similar spatial characteristic parameter (or referred to as a parameter), or a difference between spatial characteristic parameters (or referred to as parameters) of two antenna ports is less than a threshold.

It should be understood that spatial characteristic parameters of two reference signals or channels that satisfy a QCL relationship are the same (approximate or similar), so that a spatial characteristic parameter of a target reference signal can be inferred based on a resource index of a source reference signal.

It should be further understood that spatial characteristic parameters of two reference signals or channels that satisfy spatial correlation information are the same (approximate or similar), so that the spatial characteristic parameter of the target reference signal can be inferred based on the resource index of the source reference signal.

The spatial characteristic parameter includes one or more of the following parameters:
an angle of arrival (angle of arrival, AoA), a dominant (dominant) angle of arrival AoA, an average angle of arrival, a power angular spectrum (power angular spectrum, PAS) of the angle of arrival, an angle of departure (angle of departure, AoD), a dominant angle of departure, an average angle of departure, a power angular spectrum of the angle of departure, transmit beamforming of a terminal device, receive beamforming of the terminal device, spatial channel correlation, transmit beamforming of a network device, receive beamforming of the network device, an average channel gain, an average channel delay (average delay), a delay spread (delay spread), a Doppler spread (Doppler spread), a Doppler shift (Doppler shift), spatial reception parameters (spatial Rx parameters), or the like.

The foregoing angles may be decomposition values at different dimensions or a combination of decomposition values at different dimensions.

Four types of QCL are defined in an existing standard, and the network device may simultaneously configure one or more types of QCL for the terminal device, for example, QCL types A+D, and QCL types C+D:
QCL type A: Doppler shift, Doppler spread, average delay, delay spread
QCL type B: Doppler shift, Doppler spread
QCL type C: Doppler shift, average delay
QCL type D: Spatial Rx parameter

It should be understood that the foregoing four types of QCL may also have other names. For example, the QCL type A may also be referred to as a type A, a QCL-type A, or a type A. Another type of QCL is similar to this. This is not specifically limited herein. For ease of description, in the following, the QCL type A is uniformly referred to as a type A, the QCL type B is uniformly referred to as a type B, the QCL type C is uniformly referred to as a type C, and the QCL type D is uniformly referred to as a type D.

When the QCL relationship is a type D QCL relationship, it may be considered as spatial QCL. When the antenna ports satisfy the spatial QCL relationship, a QCL relationship (which is referred to as a spatial relation) between a port for a downlink signal and another port for a downlink signal or between a port for an uplink signal and another port for an uplink signal may be that the two signals have a same AoA or AoD, and is used to indicate that the two signals have a same receive beam or transmit beam. For another example, a QCL relationship between a downlink signal and an uplink signal or between a port for an uplink signal and a port for a downlink signal may be that there is a correspondence between AoAs and AoDs of the two signals, or that there is a correspondence between AoDs and AoAs of the two signals. To be specific, beam reciprocity may be used to determine an uplink transmit beam based on a downlink receive beam or determine a downlink receive beam based on an uplink transmit beam.

Signals transmitted on ports having a spatial QCL relationship may alternatively be understood as signals received or sent by using a same spatial filter (spatial filter). The spatial filter may be at least one of the following: precoding, a weight of an antenna port, a phase deflection of the antenna port, or an amplitude gain of the antenna port.

Signals transmitted on ports having a spatial QCL relationship may alternatively be understood as having corresponding beam pair links (beam pair links, BPLs). The corresponding BPLs include at least one of the following: a same downlink BPL, a same uplink BPL, an uplink BPL corresponding to a downlink BPL, or a downlink BPL corresponding to an uplink BPL.

Therefore, the spatial receive parameter (namely, a type D QCL) may be understood as a parameter indicating direction information of a receive beam.

In an example of this application, correspondences of some parameters may also be used in description of a QCL scenario.

It should be understood that, in a scenario applicable to a QCL assumption in this application, there may alternatively be an association relationship between two reference signals, or may further be an association relationship between transmission objects.

### 2. Transmission configuration indication (transmission configuration indication, TCI) state:

A TCI indicates QCL information of a signal or a channel. The channel may be a physical downlink control channel (physical downlink control channel, PDCCH)/control resource set (control resource set, CORESET), or a physical downlink shared channel (physical downlink shared channel, PDSCH). The signal may be a channel state information reference signal (channel state information reference signal, CSI-RS), a demodulation reference signal (demodulation reference signal, DMRS), a TRS, a synchronization signal/broadcast channel block (synchronization signal/PBCH block, SS/PBCH block), or the like. TCI information indicates that a reference signal included in a TCI and the channel or the signal satisfy a QCL relationship, and is mainly used to indicate that during reception of the signal or the channel, information such as a spatial characteristic parameter of the signal or the channel is the same as, similar to, or approximate to information such as a spatial characteristic parameter of the reference signal included in the TCI.

One or more referenced reference signals and an associated QCL type (QCL type) may be configured for one TCI state (TCI state). The QCL type may further be classified into type A, type B, type C, and type D that are different combinations or selections of {Doppler shift, Doppler spread, average delay, delay spread, spatial Rx parameter}. The TCI state includes QCL information, or the TCI state indicates QCL information.

Configuration information of the TCI state may be as follows:

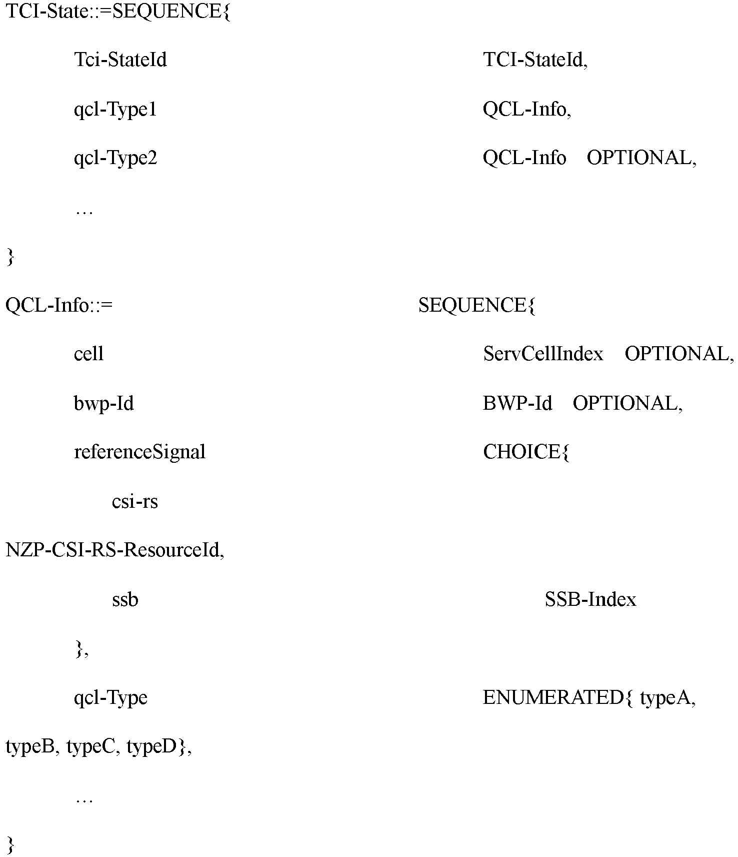

qcl-Type1 is a first piece of QCL information, qcl-Type2 is a second piece of QCL information, and QCL-Info is specific content corresponding to qcl-Type; reference Signal is a reference signal that satisfies the QCL relationship; and qcl-Type is a specific QCL type, for example, typeA, typeB, typeC, or typeD.

### 3. SS/PBCH block:

An SS/PBCH block may also be referred to as an SSB. PBCH is an abbreviation of a physical broadcast channel (physical broadcast channel). The SSB includes at least one of a primary synchronization signal (primary synchronization signal, PSS), a secondary synchronization signal (secondary synchronization signal, SSS), and a PBCH. The SSB is a signal mainly used for cell search, cell synchronization, and carrying broadcast information.

It should be noted that, with continuous development of technologies, the terms in embodiments of this application may change, but all of them shall fall within the protection scope of this application.

To make objectives, technical solutions, and advantages of embodiments of this application clearer, the following further describes embodiments of this application in detail with reference to accompanying drawings.

A data transmission method provided in this application may be applied to various communication systems, for example, an internet of things (internet of things, IoT), a narrow band internet of things (narrow band internet of things, NB-IoT), an LTE, a 5th generation (5G) communication system, an LTE-5G hybrid architecture, a 5G NR system or a new communication system emerging in future communication development. The 5G communication system described in this application may include at least one of a non-standalone (non-standalone, NSA) 5G communication system or a standalone (standalone, SA) 5G communication system. The communication system may also be a public land mobile network (public land mobile network, PLMN), a device-to-device (device-to-device, D2D) network, a machine-to-machine (machine-to-machine, M2M) network, or another network.

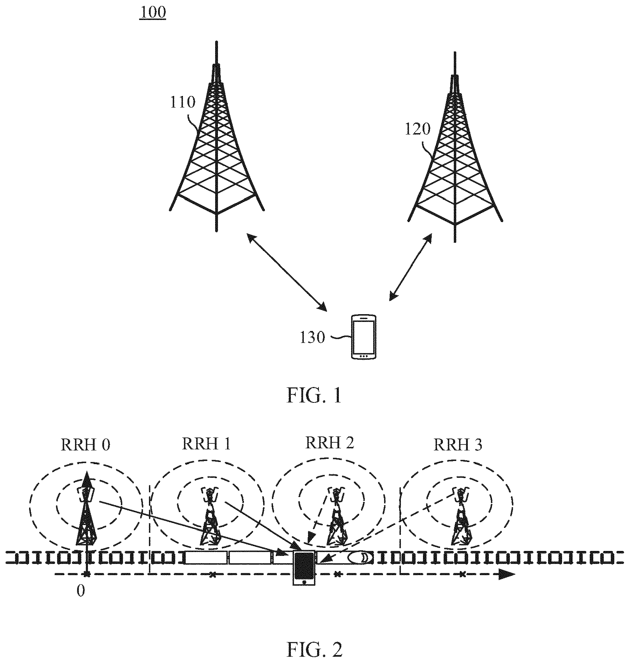

FIG. 1 shows a communication system 100 applicable to embodiments of this application. The communication system 100 may include a network device 110, a network device 120, and a terminal device 130. The communication systems applicable to embodiments of this application are merely examples for description. Communication systems applicable to embodiments of this application are not limited thereto. For example, a quantity of network devices and a quantity of terminal devices included in the communication system may be other quantities, or a scenario with a single base station and multi-carrier aggregation, a dual-link scenario, a D2D communication scenario, or a coordinated multi-point (coordinated multi-point, CoMP) scenario. CoMP may be one or more of a non-coherent joint transmission (non-coherent joint transmission, NCJT) scenario, a coherent joint transmission (coherent joint transmission, CJT) scenario, a joint transmission (joint transmission, JT) scenario, or the like.

A terminal device in embodiments of this application is an entity on a user side that is configured to receive or transmit a signal. The terminal device may be a device that provides voice and data connectivity for a user, for example, a handheld device or a vehicle-mounted device having a wireless connection function. The terminal device may alternatively be another processing device connected to a wireless modem. The terminal device may communicate with one or more core networks through a radio access network (radio access network, RAN). The terminal device may also be referred to as a wireless terminal, a subscriber unit (subscriber unit), a subscriber station (subscriber station), a mobile station (mobile station), a mobile console (mobile), a remote station (remote station), an access point (access point), a remote terminal (remote terminal), an access terminal (access terminal), a user terminal (user terminal), a user agent (user agent), a user device (user device), user equipment (user equipment), or the like. The terminal device may be a mobile terminal, for example, a mobile phone (or referred to as a "cellular" phone), and a computer that has a mobile terminal. For example, the terminal device may be a portable, pocket-sized, handheld, computer built-in, or vehicle-mounted mobile apparatus, which exchanges a voice and/or data with the radio access network. For example, the terminal device may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). For example, common terminal devices include a mobile phone, a tablet computer, a notebook computer, a palmtop computer, a mobile internet device (mobile internet device, MID), and a wearable device such as a smartwatch, a smart band, or a pedometer. However, embodiments of this application are not limited thereto. The terminal device in embodiments of this application may alternatively be a terminal device or the like appearing in a future evolved PLMN. This is not limited in embodiments of this application.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrow band (narrow band, NB) technology.

In addition, in embodiments of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to the network device.

A network device in embodiments of this application is an entity on a network side that is configured to transmit or receive a signal. The network device in embodiments of this application may be a device in a wireless network, for example, a RAN node that connects the terminal to the wireless network. For example, the network device may be an evolved NodeB (evolutional NodeB, eNB or e-NodeB) in LTE, or may be a new radio controller (new radio controller, NR controller), may be a gNodeB (gNB) in a 5G system, may be a centralized unit (centralized unit, CU), may be a new radio base station, may be a radio remote module, may be a micro base station, may be a relay (relay), may be a distributed unit (distributed unit, DU), may be a home base station, may be a transmission reception point (transmission reception point, TRP) or a transmission point (transmission point, TP), or may be any other wireless access device. This is not limited in embodiments of this application. The network device may cover one or more cells.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

Currently, a wireless coverage technology mainly has three networking modes: an SFN, a dual-band network, and a multiband network. The single frequency network may use a same frequency at a same time to perform signal coverage within a specific range, thereby reducing a quantity of handovers of UE. In LTE, in single frequency networking, a plurality of RRHs may be connected to one BBU. The plurality of RRHs use a same cell identifier (Cell ID). All RRHs connected to one BBU jointly send data to one UE.

In LTE, all RRHs connected to one BBU jointly send data to one UE. The UE simultaneously receives reference signals from the plurality of RRHs, and performs channel estimation and time-frequency tracking based on the reference signals from the plurality of RRHs. In LTE, LTE uses CRSs as downlink reference signals. That is, all UEs in a cell receive same CRSs for channel estimation and time-frequency tracking. Therefore, in LTE, all RRHs connected to one BBU jointly send data to one UE, and the UE simultaneously receives same reference signals from the plurality of RRHs. In some high-speed mobility scenarios, for example, on a high-speed railway or on a bullet train, when UE uses CRSs to perform Doppler spectrum estimation, a multipath signal is generated when the CRSs sent by all RRHs connected to one BBU arrive at the UE because the CRSs occupy a same time-frequency resource at a fixed location. As a result, a Doppler spread problem occurs, and the UE cannot properly determine a center frequency for downlink synchronization. This reduces accuracy of receiving data. For example, as shown in FIG. 2, a terminal device is on a high-speed railway. Four RRHs are deployed along the high-speed railway, which are respectively an RRH 0 to an RRH 3. The RRH 0 to the RRH 3 are connected to a same BBU. The RRH 0 to the RRH 3 jointly send data to UE. Because CRSs sent by the RRH 0 to the RRH 3 occupy a same time-frequency resource at a fixed location, the CRSs sent by the RRH 0 to the RRH 3 to the UE form a four-path signal. As a result, a Doppler spread problem occurs.

In addition, the CRS occupies the time-frequency resource at the fixed location, and consequently the time-frequency resource is wasted to some extent.

In view of this, embodiments of this application provide a data transmission method and apparatus, to improve accuracy of receiving data by UE in a high-speed mobility scenario. The method and the apparatus are based on a same inventive idea. Because the method and the apparatus have a similar problem-resolving principle, for implementations of the apparatus and the method, refer to each other, and no repeated description is provided.

In embodiments of this application, data may be a codeword (codeword), a transport block (transport block), a code block (code block), a code block group (code block group), or the like.

It should be understood that, in embodiments of this application, "at least one" means one or more, and "a plurality of' means two or more. The term "and/or" describes an association relationship between associated obj ects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, it should be understood that, in the descriptions of this application, terms such as "first" and "second" are only used for a purpose of distinguishing descriptions, but cannot be understood as indicating or implying relative importance, or as indicating or implying a sequence, or indicating a quantity.

The following further illustrates the methods provided in embodiments of this application in detail with reference to the accompanying drawings.

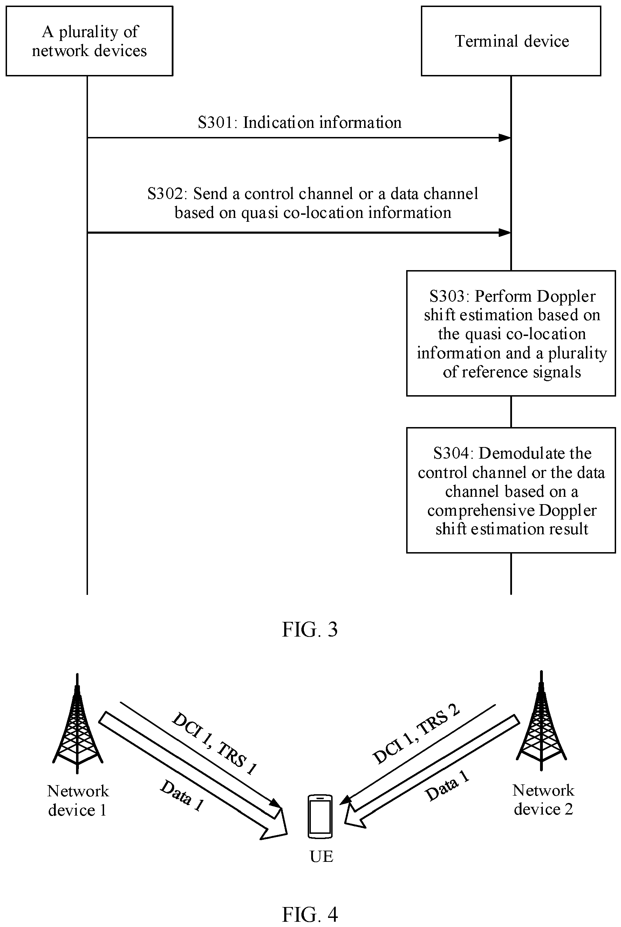

Embodiment 1: FIG. 3 is a flowchart of a data transmission method according to this application. The method may be applied to a communication system in SFN networking. In the communication system, a plurality of network devices may jointly send data to a terminal device on a same frequency. In an example, the plurality of network devices may be RRHs. The plurality of network devices are connected to a same BBU.

The method may be applied to a communication device, a chip, a chipset, or the like. The following uses a communication device as an example for description. The method includes the following steps.

S301: A plurality of network devices send indication information to a terminal device. The indication information indicates QCL information of a control channel or a data channel. The QCL information indicates that the control channel or the data channel has a quasi co-location relationship with a plurality of reference signals. Correspondingly, the terminal device receives the indication information. For example, the indication information may be a TCI state. For ease of description, the indication information is collectively referred to as a TCI state below.

The indication information may be sent by using one piece of signaling, or may be sent by using a plurality of pieces of signaling.

The plurality of reference signals may include at least one of the following: a tracking reference signal (CSI-RS for tracking, TRS) and an SSB. Certainly, the reference signal may alternatively be another signal. This is not specifically limited herein. In an implementation, the plurality of reference signals may be configured by using higher layer signaling (for example, radio resource control (radio resource control, RRC) signaling).

In an example, the data channel or the control channel may include a demodulation reference signal (demodulation reference signal, DMRS). The DMRS may be configurable.

For example, the TCI state may include one piece of configuration information indicating the quasi co-location information. The configuration information includes a reference signal list. The reference signal list includes identifiers of a plurality of reference signals. In the foregoing manner, the reference signal list included in the configuration information of the QCL information carries the identifiers of the plurality of reference signals, so that the QCL information is associated with the plurality of reference signals.

For example, configuration information of the TCI state may be:

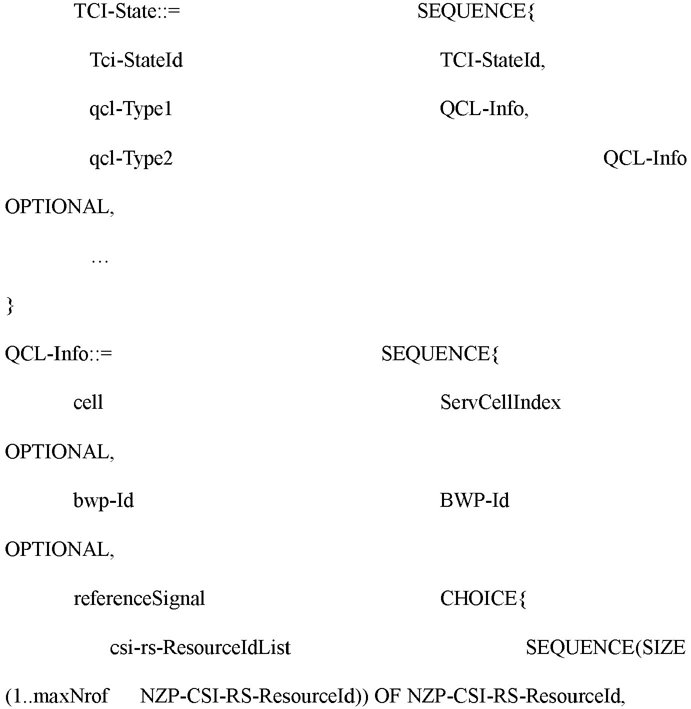

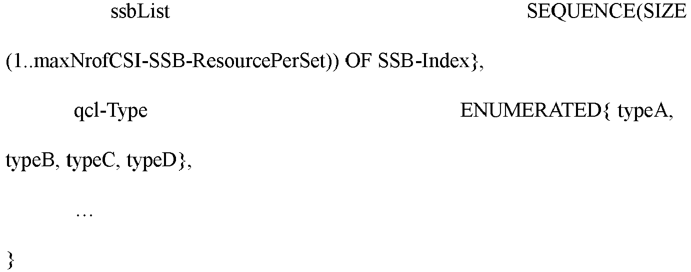

QCL-Info is configuration information indicating QCL information, and csi-rs-ResourceIdList and ssbList are reference signal lists. If the reference signal is a TRS, csi-rs-ResourceIdList includes identifiers of a plurality of TRSs. The plurality of TRSs are associated with the QCL information. If the reference signal is an SSB, ssbList includes identifiers of a plurality of SSBs. The plurality of SSBs are associated with the QCL information. TRSs corresponding to a plurality of TRS identifiers in csi-rs-ResourceIdList may belong to different NZP-CSI-RS-ResourceSets that carry trs-Info. SSBs corresponding to a plurality of SSB indexes in ssbList may correspond to different beams.

For another example, the TCI state may include a plurality of pieces of configuration information indicating the quasi co-location information. The plurality of pieces of configuration information are one-to-one associated with a plurality of reference signals. Each piece of configuration information includes reference signal information. The reference signal information includes an identifier of a reference signal associated with the configuration information. In the foregoing manner, the TCI state includes a plurality of pieces of configuration information. One piece of configuration information is associated with one reference signal. The plurality of pieces of configuration information may indicate a same quasi co-location type, for example, "QCL-typeA", but are associated with different reference signals, so that QCL information is associated with a plurality of reference signals.

For example, one piece of "type A" may be configured for the TCI state. The "type A" includes one CSI-RS in one NZP-CSI-RS-ResourceSet that carries trs-Info. Alternatively, two pieces of "type A" may be configured for the TCI state. CSI-RS resources included in the two pieces of "type A" belong to two different NZP-CSI-RS-ResourceSets that carry trs-Info. If applicable, a "type D" may further be configured for the TCI state. The "type D" and the "type A" may include a same CSI-RS resource. NZP-CSI-RS-ResourceSet may be configured by using higher layer signaling (for example, RRC signaling).

In an implementation, step S301 may be implemented in the following manner: For a control channel, the network device may configure a plurality of TCI states by using higher layer RRC, for example, configure 64 TCI states for each CORESET. In addition, a media access control element (media access control control element, MAC CE) is used to activate a currently to-be-used TCI state.

In another implementation, step S301 may be implemented in the following manner: For a data channel, the network device may configure a plurality of TCI states by using higher layer RRC, for example, configure 128 TCI states. In addition, a MAC CE is used to activate at least one TCI state. For example, when one TCI state is activated, the TCI state may be understood as a currently to-be-used TCI state. When more than one TCI state is activated, for example, eight TCI states are activated, downlink control information (downlink control information, DCI) is used to indicate the currently to-be-used TCI state.

S302: A plurality of network devices send a control channel or a data channel to a terminal device based on the quasi co-location information. Correspondingly, the terminal device receives the control channel or the data channel from the plurality of network devices.

S303: The terminal device performs Doppler shift estimation based on the quasi co-location information for the plurality of reference signals, to obtain a comprehensive Doppler shift estimation result.

In an implementation, the terminal device may separately perform Doppler shift estimation on the plurality of reference signals based on the quasi co-location information, to obtain Doppler shift estimation results that respectively correspond to the plurality of reference signals. The Doppler shift estimation results that correspond to the plurality of reference signals are combined to obtain the comprehensive Doppler shift estimation result.

For example, if the indication information indicates that the data channel has a type A quasi co-location relationship with a TRS 1, a TRS 2, and a TRS 3, the terminal device may separately perform Doppler shift estimation on the TRS 1, the TRS 2, and the TRS 3 based on the type A, to obtain a Doppler shift estimation result of the TRS 1, a Doppler shift estimation result of the TRS 2, and a Doppler shift estimation result of the TRS 3. Then, the Doppler shift estimation result of the TRS 1, the Doppler shift estimation result of the TRS 2, and the Doppler shift estimation result of the TRS 3 are combined to obtain a comprehensive Doppler shift estimation result.

S304: The terminal device demodulates the control channel or the data channel based on the comprehensive Doppler shift estimation result.

In an implementation, the terminal device may perform time-frequency offset calibration and channel estimation based on the comprehensive Doppler shift estimation result, to obtain a channel estimation result, and demodulate the control channel or the data channel based on the channel estimation result.

To better understand the data transmission method provided in Embodiment 1, the following describes a data transmission process in detail with reference to a specific scenario.

In a scenario, a network device 1 and a network device 2 may jointly send data 1 to UE. It should be understood that this is merely an example for description herein, and a quantity of network devices, a quantity of reference signals, and the like in a data transmission process are not specifically limited.

As shown in FIG. 4, a data transmission process may be as follows.

A1: The network device 1 and the network device 2 send DCI 1 to the UE. The DCI 1 indicates a TCI state. The TCI state indicates QCL information of the data channel. The QCL information indicates that the data channel has a quasi co-location relationship with the TRS 1 and the TRS 2.

In an example, the TCI state may be configured as follows:

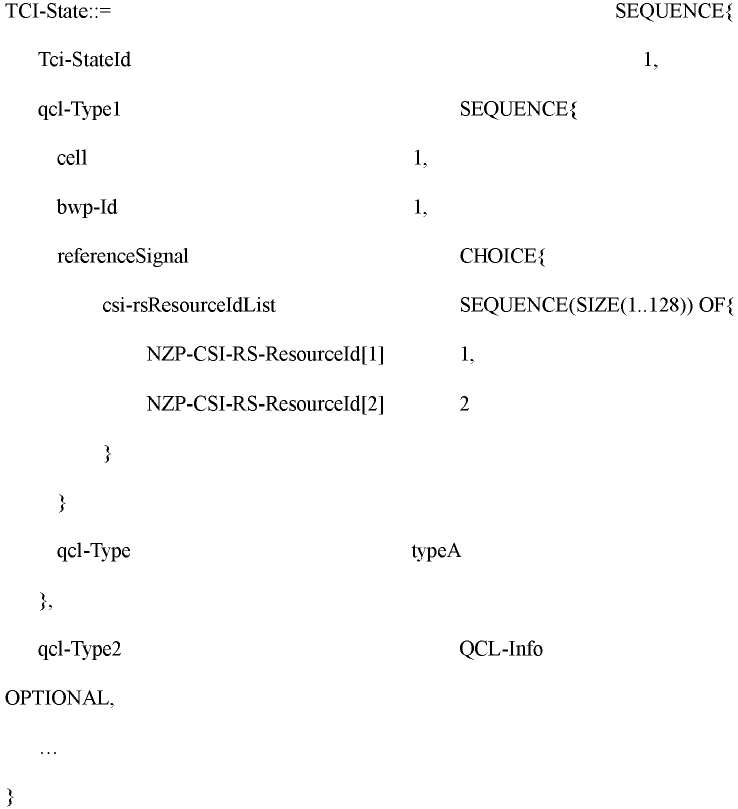

referenceSignal is a type of an associated reference signal, and is a TRS herein, that is, CSI-RS for tracking; and csi-rsResourceIdList is an identifier list of associated reference signals, and specifically includes NZP-CSI-RS-ResourceId[1] and NZP-CSI-RS-ResourceId[2]. NZP-CSI-RS-ResourceId[1] refers to the TRS 1. NZP-CSI-RS-ResourceId[2] refers to the TRS 2. In this example, the TCI-State may further include other quasi co-location information, for example, qcl-Type2.

In another example, the TCI state may be:

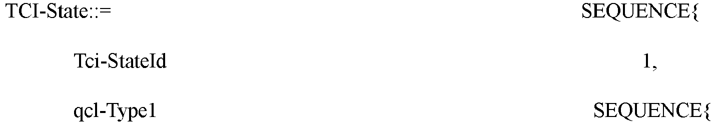

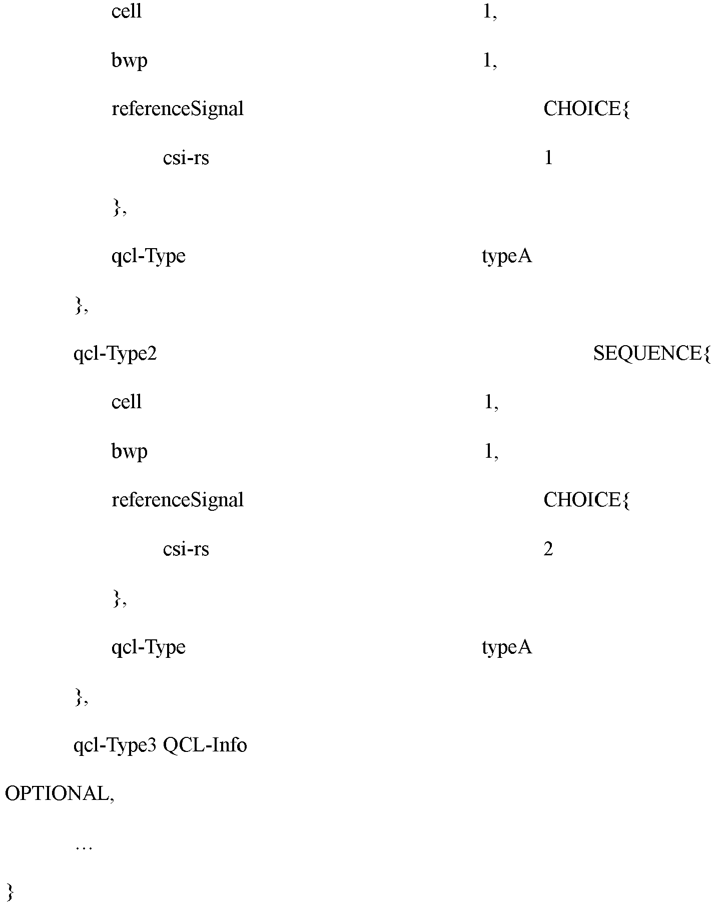

referenceSignals in qcl-Type1 and qcl-Type2 indicate that different reference signals are associated, but have a same qcl-Type, for example, the two reference signals may both be a type A; qcl-Type1 indicates that the data channel has a quasi co-location relationship with the TRS 1, and the quasi co-location relationship is a quasi co-location type A; and qcl-Type2 indicates that the data channel has a quasi co-location relationship with the TRS 2, and the quasi co-location relationship is a quasi co-location type A. In this example, the TCI-State may further include other quasi co-location information, for example, qcl-Type3.

A2: The network device 1 sends the data 1 to the UE based on the TRS 1, and the network device 2 sends the data 1 to the UE based on the TRS 2.

A3: The UE separately performs Doppler shift estimation on the TRS 1 and the TRS 2 based on the received TCI state, to obtain a Doppler shift estimation result of the TRS 1 and a Doppler shift estimation result of the TRS 2.

A4: The UE combines the Doppler shift estimation result of the TRS 1 and the Doppler shift estimation result of the TRS 2 to obtain a comprehensive Doppler shift estimation result.

A5: The UE performs time-frequency offset calibration and channel estimation based on the comprehensive Doppler shift estimation result, to obtain a channel estimation result.

A6: The UE demodulates the data 1 based on the channel estimation result.

According to this solution provided in Embodiment 1, the quasi co-location information is associated with the plurality of reference signals, that is, there is a quasi co-location relationship between the data channel and the plurality of reference signals, so that the terminal device can estimate accurate channel information and a Doppler shift based on the plurality of reference signals when there is a multipath signal, thereby improving channel estimation precision, for example, precision of a time-domain difference of channel estimation, to improve receiving performance.

Embodiment 2: This application provides another data transmission method. The method may be applied to a communication system in SFN networking. In the communication system, a plurality of network devices may jointly send data to a terminal device on a same frequency. In an example, the plurality of network devices may be RRHs. The plurality of network devices are connected to a same BBU. For ease of description, the following uses the RRH as an example for description.

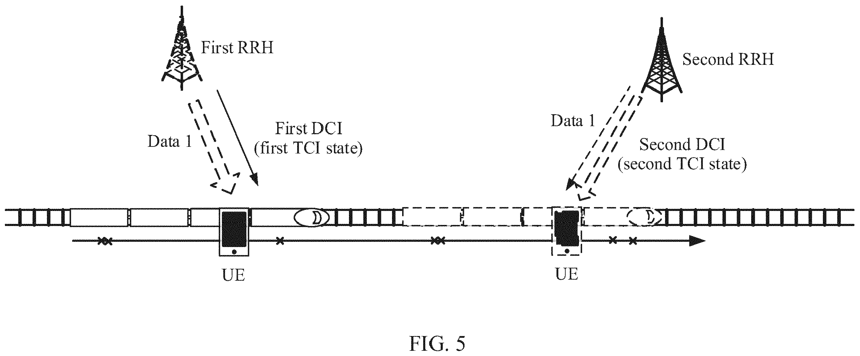

In this method, a network device configures, for UE, two or more TCI states associated with different RRHs. The network device activates only one TCI state at a moment, and only N RRHs in the plurality of RRHs send data to the UE based on the TCI state. N is an integer greater than or equal to 1. The following uses an example in which N is equal to 1 for description. As shown in FIG. 5, a data transmission process may be as follows.

B1: A first RRH sends first DCI to the terminal device. The first DCI is used to activate a currently to-be-used first TCI state. The first RRH sends data 1 to the terminal device based on the first TCI state.

B2: The terminal device demodulates the data 1 based on the first TCI state.

In an implementation, the terminal device may perform time-frequency offset tracking and channel estimation based on the first TCI state, and demodulate the data 1, specifically, perform Doppler shift estimation to obtain a Doppler shift estimation result. Time-frequency offset calibration and channel estimation are performed based on the Doppler shift estimation result, to obtain a channel estimation result. The data 1 is demodulated based on the channel estimation result.

B3: The terminal device measures channel quality of the first RRH and channel quality of one or more other RRHs. The first RRH and the one or more other RRHs are connected to a same BBU. A quality parameter is a parameter indicating reference signal quality. For example, the quality parameter may be reference signal received power (reference signal received power, RSRP), reference signal received quality (reference signal received quality, RSRQ), or the like.

B4: The terminal device reports a quality parameter set to the first RRH. The quality parameter set includes a quality parameter of the first RRH and quality parameters of one or more other RRHs.

In an implementation, the terminal device may periodically measure and report the quality parameter set.

B5: The first RRH sends the measured quality parameter set to the BBU.

B6: The BBU determines, based on the quality parameter set reported by the terminal device, an RRH that provides a service for the terminal device. It is assumed that the BBU determines to switch the RRH that provides a service for the terminal device from the first RRH to a second RRH

In an implementation, the BBU may determine that an RRH corresponding to a largest quality parameter in the quality parameter set is an RRH provided for the terminal device.

In another implementation, the BBU may determine a quality parameter change process of each RRH based on historical data of the quality parameter of each RRH, and determine, based on the change process, an RRH that provides a service for the terminal device. For example, it is determined that an RRH whose quality parameter gradually increases is the RRH that provides a service for the terminal device.

In still another implementation, the BBU may determine a quality parameter that is greater than a quality parameter threshold and that is in the quality parameter set, determine a quality parameter change process of each RRH based on historical data of RRHs corresponding to the quality parameter, and determine, based on the change process, an RRH that provides a service for the terminal device. For example, it is determined that an RRH whose quality parameter gradually increases is the RRH that provides a service for the terminal device.

Certainly, the BBU may alternatively determine, in another manner, the RRH provided for the terminal device. Details are not listed herein.

B7: The second RRH sends second DCI to the terminal device. The second DCI is used to activate a currently to-be-used second TCI state. The second TCI state may be the same as the first TCI state, or may be different from the first TCI state. This is not specifically limited herein.

In an implementation, after the BBU determines to switch the RRH provided for the terminal device from the first RRH to the second RRH, the first RRH may stop sending the data 1 to the terminal device.

B8: The terminal device activates the second TCI state. In an implementation, if the second TCI state is the same as the first TCI state, after step B7, step B9 may be performed, that is, step B8 may not be performed.

B9: The second RRH sends the data 1 to the terminal device based on the second TCI state.

B10: The terminal device demodulates the data 1 based on the second TCI state.

A process in which the terminal device demodulates the data 1 based on the second TCI state is similar to that in which the terminal device demodulates the data 1 based on the first TCI state. Similarities are not described again.

In Embodiment 2, the terminal device needs to track only one TCI state at a moment, that is, activate only one TCI state for the terminal device. This can reduce implementation complexity.

Embodiment 3: This application provides another data transmission method. The method may be applied to a communication system in SFN networking. In the communication system, a plurality of network devices may jointly send data to a terminal device on a same frequency. In an example, the plurality of network devices may be RRHs. The plurality of network devices are connected to a same BBU. For ease of description, the following uses the RRH as an example for description.

In this method, the network device activates at least two TCI states for the terminal device, and only N RRHs in the plurality of RRHs send data to UE at a moment. N is an integer greater than or equal to 1. The following provides description by using an example in which the network device activates two TCI states and only one of the plurality of RRHs sends data to the UE at a moment. As shown in FIG. 5, a data transmission process may be as follows.

C1: The first RRH sends first DCI to the terminal device. The first DCI is used to indicate a first TCI state in the two TCI states. The first TCI state is used to send data in a current first RRH

In an implementation, a BBU may configure a plurality of TCI states by using higher layer RRC signaling, and activate two of the plurality of TCI states by using a MAC CE.

C2 to C7: For details, reference may be made to steps B3 to B8 in the foregoing Embodiment 2.

C8: The second RRH sends second DCI to the terminal device. The second DCI is used to indicate the second TCI state in the two TCI states. The second TCI state may be the same as the first TCI state, or may be different from the first TCI state. This is not specifically limited herein.

In an implementation, after the BBU determines to switch the RRH provided for the terminal device from the first RRH to the second RRH, the first RRH may stop sending the data 1 to the terminal device.

C9 and C10: For details, reference may be made to steps B9 and B10 in the foregoing Embodiment 2.

In Embodiment 3, the data channel and the control channel m ay use a same TCI state, or may use different TCI states. If the data channel and the control channel use the same TCI state, a new TCI state to which the control channel is switched may be indicated by using a MAC CE. The TCI state may be applicable to the data channel and the control channel. In this implementation, two TRSs associated with different TCI states may be configured. If the data channel and the control channel use different TCI states, the TCI state of the control channel may remain unchanged, and the TCI state of the data channel is dynamically indicated based on DCI by using a specific RRH that provides a service.

In the foregoing Embodiment 3, in different coverage areas, the terminal device can obtain accurate Doppler shift information based on different TCI states, so that a Doppler spread problem caused by a multipath can be avoided, and a Doppler shift can be accurately estimated and corrected. Therefore, in a high-speed movement process, UE can accurately lock a beam for receiving and sending data, thereby improving receiving performance. In addition, in Embodiment 3, the terminal device simultaneously tracks two or more TCI states, so that when the terminal device switches between TCI states, a time for activating a new TCI state can be reduced. This can avoid interruption of data transmission to some extent.

Embodiment 4: This application provides another data transmission method. The method may be applied to a communication system in SFN networking. In the communication system, a plurality of network devices may jointly send data to a terminal device on a same frequency. In an example, the plurality of network devices may be RRHs. The plurality of network devices are connected to a same BBU. For ease of description, the following uses the RRH as an example for description.

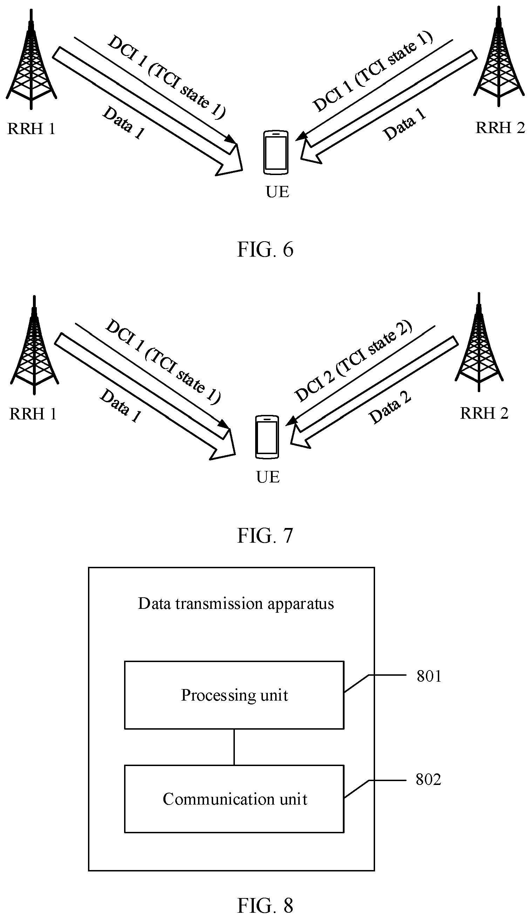

In this method, the network device activates one TCI state. All configured reference signals are associated with the TCI state. All RRHs connected to a same BBU jointly send data to the terminal device based on the TCI state. For example, both the RRH 1 and the RRH 2 send DCI 1 to the terminal device, and the DCI 1 is used to indicate a TCI state 1. Both the RRH 1 and the RRH 2 send data 1 to the terminal device by using the TCI state 1, as shown in FIG. 6.

Embodiment 5: This application provides another data transmission method. The method may be applied to a communication system in SFN networking. In the communication system, a plurality of network devices may jointly send data to a terminal device on a same frequency. In an example, the plurality of network devices may be RRHs. The plurality of network devices are connected to a same BBU. For ease of description, the following uses the RRH as an example for description.

In this method, the network device may configure, for the UE, a plurality of TCI states associated with different TRSs. Different RRHs may respectively indicate corresponding TCI states and schedule different data based on DCI. For example, the RRH 1 indicates a TCI state 1 to the terminal device based on DCI 1, and sends data 1 to the terminal device based on the TCI state 1. The RRH 2 indicates a TCI state 2 to the terminal device based on DCI 2, and sends data 2 to the terminal device based on the TCI state 2, as shown in FIG. 7. The TCI state 1 and the TCI state 2 may be the same, or may be different. This is not specifically limited herein.

In the foregoing Embodiment 5, different RRHs may respectively indicate corresponding TCI states and schedule different data based on the DCI. This can improve data receiving of a cell edge user, to improve spectrum utilization.

Based on a same technical idea as method embodiments, an embodiment of this application provides a data transmission apparatus. A structure of the data transmission apparatus may be shown in FIG. 8, and includes a processing unit 801 and a communication unit 802.

In an implementation, the data transmission apparatus may be specifically configured to implement the method performed by a terminal device in this embodiment in FIG. 3 or FIG. 4. The apparatus may be the terminal device, or may be a chip, a chipset, or a part of a chip, where the chip and the chipset are in the terminal device, and the part of the chip is configured to perform a function of a related method. The communication unit 802 is configured to: receive indication information, where the indication information indicates quasi co-location information of a control channel or a data channel, and the quasi co-location information indicates that the control channel or the data channel has a quasi co-location relationship with a plurality of reference signals; and receive a control channel or a data channel from a plurality of network devices. The processing unit 801 is configured to: perform Doppler shift estimation based on the quasi co-location information for the plurality of reference signals, to obtain a comprehensive Doppler shift estimation result; and demodulate the control channel or the data channel based on the comprehensive Doppler shift estimation result.

When performing Doppler shift estimation based on the quasi co-location information for the plurality of reference signals, to obtain a comprehensive Doppler shift estimation result, the processing unit 801 may be specifically configured to: separately perform Doppler shift estimation on the plurality of reference signals based on the quasi co-location information, to obtain Doppler shift estimation results that respectively correspond to the plurality of reference signals; and combine the Doppler shift estimation results that correspond to the plurality of reference signals, to obtain the comprehensive Doppler shift estimation result.

For example, the indication information may include one piece of configuration information indicating the quasi co-location information. The configuration information includes a reference signal list. The reference signal list includes identifiers of a plurality of reference signals.

Alternatively, the indication information may include a plurality of pieces of configuration information indicating quasi co-location information. The plurality of pieces of configuration information are one-to-one associated with a plurality of reference signals.

The plurality of reference signals may include at least one of the following: a TRS and an SSB.

In another implementation, the data transmission apparatus may be specifically configured to implement the method performed by a network device in this embodiment in FIG. 3 or FIG. 4. The apparatus may be the network device, or may be a chip, a chipset, or a part of a chip, where the chip and the chipset are in the network device, and the part of the chip is configured to perform a function of a related method. The communication unit 802 is configured to send indication information. The indication information indicates quasi co-location information of a control channel or a data channel. The quasi co-location information indicates that the control channel or the data channel has a quasi co-location relationship with a plurality of reference signals. The processing unit 801 is configured to send, by using the communication unit 802, a control channel or a data channel to a terminal device based on the quasi co-location information.

For example, the indication information may include one piece of configuration information indicating the quasi co-location information. The configuration information includes a reference signal list. The reference signal list includes identifiers of a plurality of reference signals.

Alternatively, the indication information may include a plurality of pieces of configuration information indicating quasi co-location information. The plurality of pieces of configuration information are one-to-one associated with a plurality of reference signals.

The plurality of reference signals may include at least one of the following: a TRS and an SSB.

In an implementation, the data transmission apparatus may be specifically configured to implement the method performed by a terminal device in Embodiment 2 in FIG. 5. The apparatus may be the terminal device, or may be a chip, a chipset, or a part of a chip, where the chip and the chipset are in the terminal device, and the part of the chip is configured to perform a function of a related method. The communication unit 802 is configured to: receive first information, where the first information is used to activate one transmission configuration indication TCI state, and the TCI state is associated with a tracking reference signal TRS resource; and receive a TRS from a first radio remote head RRH. The first RRH is an RRH that currently provides a service in a plurality of RRHs connected to a same baseband processing unit BBU. The TRS is a TRS corresponding to the TRS resource. The processing unit 801 is configured to perform, based on the TRS, at least one of the following: channel estimation and Doppler shift estimation.

Optionally, the communication unit 802 is further configured to receive second information from the first RRH. The second information is used to indicate switching from the first RRH to a second RRH. The processing unit 801 is further configured to switch from the first RRH to the second RRH

Optionally, the processing unit 801 may be further configured to: before the communication unit 802 receives the second information from the first RRH, separately perform signal quality measurement on reference signals sent by the plurality of RRHs, to obtain measurement values that respectively correspond to the plurality of RRHs. The communication unit is further configured to report the measurement values that respectively correspond to the plurality of RRHs to the first RRH

Optionally, the communication unit 802 is further configured to: before the processing unit 801 switches from the first RRH to the second RRH, receive data from the first RRH based on a result obtained by performing, based on the TRS, at least one of the following: channel estimation and Doppler shift estimation.

In an implementation, the data transmission apparatus may be specifically configured to implement the method performed by a terminal device in Embodiment 2 in FIG. 5. The apparatus may be the terminal device, or may be a chip, a chipset, or a part of a chip, where the chip and the chipset are in the terminal device, and the part of the chip is configured to perform a function of a related method. The communication unit 802 is configured to: receive first information, where the first information is used to activate a first TCI state and a second TCI state; and receive a first TRS from a first RRH and a second TRS from a second RRH. The first RRH is an RRH that currently provides a service in a plurality of RRHs connected to a same baseband processing unit BBU. The first TRS is a TRS corresponding to the first TCI state. The second TRS is a TRS corresponding to the second TCI state. The processing unit 801 is configured to: perform, based on the first TRS, at least one of the following: channel estimation and Doppler shift estimation; or after switching from the first RRH to the second RRH, perform, based on the second TRS, at least one of the following: channel estimation and Doppler shift estimation.

Optionally, the communication unit 802 is further configured to: before the processing unit 801 switches from the first RRH to the second RRH, receive second information from the first RRH. The second information is used to indicate switching from the first RRH to the second RRH

The processing unit 801 is further configured to: before the communication unit 802 receives the second information from the first RRH, separately perform signal quality measurement on reference signals sent by the plurality of RRHs, to obtain measurement values that respectively correspond to the plurality of RRHs. The communication unit 802 is further configured to report the measurement values that respectively correspond to the plurality of RRHs to the first RRH

Optionally, the processing unit 801 is further configured to: after performing, based on the first TRS, at least one of the following: channel estimation and Doppler shift estimation, receive, by using the communication unit 802, data from the first RRH based on a result obtained by performing, based on the first TRS, at least one of the following: channel estimation and Doppler shift estimation.

Optionally, the processing unit 801 is further configured to: after performing, based on the second TRS, at least one of the following: channel estimation and Doppler shift estimation, receive, by using the communication unit 802, data from the second RRH based on a result obtained by performing, based on the second TRS, at least one of the following: channel estimation and Doppler shift estimation.

In an implementation, the data transmission apparatus may be specifically configured to implement the method performed by a terminal device in this embodiment in FIG. 6. The apparatus may be the terminal device, or may be a chip, a chipset, or a part of a chip, where the chip and the chipset are in the terminal device, and the part of the chip is configured to perform a function of a related method. The communication unit 802 is configured to perform a receiving and sending action of the terminal device in Embodiment 4, for example, receive DCI 1. The processing unit 801 is configured to perform an action other than the receiving and sending action of the terminal device in Embodiment 4, or receive and send a signal by using the communication unit 802, for example, receive the DCI 1 by using the communication unit 802.

In an implementation, the data transmission apparatus may be specifically configured to implement the method performed by a terminal device in this embodiment in FIG. 7. The apparatus may be the terminal device, or may be a chip, a chipset, or a part of a chip, where the chip and the chipset are in the terminal device, and the part of the chip is configured to perform a function of a related method. The communication unit 802 is configured to perform a receiving and sending action of the terminal device in Embodiment 5, for example, receive data sent by a plurality of network devices. The processing unit 801 is configured to perform an action other than the receiving and sending action of the terminal device in Embodiment 4, or receive and send a signal by using the communication unit 802, for example, receive the data sent by the plurality of network devices by using the communication unit 802.

Division into modules in this embodiment of this application is an example, is merely logical function division, and may be other division in an actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for functions or implementations of modules in embodiments of this application, further refer to related descriptions in the method embodiments.

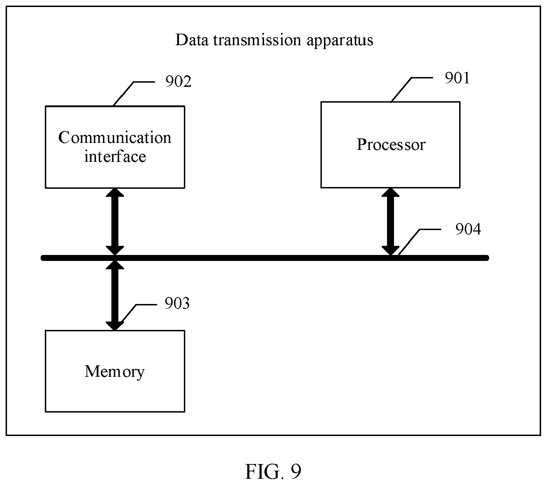

In a possible manner, the data transmission apparatus may be shown in FIG. 9. The data transmission apparatus may be a communication device or a chip in the communication device. The communication device may be a terminal device, or may be a network device. The apparatus may include a processor 901, a communication interface 902, and a memory 903. The processing unit 801 may be the processor 901. The communication unit 802 may be a communication interface 902.

The processor 901 may be a central processing unit (central processing unit, CPU), a digital processing unit, or the like. The communication interface 902 may be a transceiver, an interface circuit such as a transceiver circuit, a transceiver chip, or the like. The apparatus further includes a memory 903, configured to store a program executed by the processor 901. The memory 903 may be a nonvolatile memory, for example, a hard disk (hard disk drive, HDD) or a solid-state drive (solid-state drive, SSD), or may be a volatile memory (volatile memory), for example, a random access memory (random access memory, RAM). The memory 903 is any other medium that can be configured to carry or store expected program code that has instructions or a data structure form and that can be accessed by a computer, but is not limited thereto.

The processor 901 is configured to execute the program code stored in the memory 903, and is specifically configured to perform an action of the processing unit 801. Details are not described in this application again. The communication interface 902 is specifically configured to perform an action of the communication unit 802. Details are not described herein in this application.

In this embodiment of this application, a specific connection medium between the communication interface 902, the processor 901, and the memory 903 is not limited. In this embodiment of this application, the memory 903, the processor 901, and the communication interface 902 are connected by using a bus 904 in FIG. 9, and the bus is represented by a thick line in FIG. 9. A connection manner between other components is merely schematically described, and is not limited thereto. The bus may be classified into an address bus, a data bus, a control bus, and the like. For ease of representation, only one thick line is used to represent the bus in FIG. 9, but this does not mean that there is only one bus or only one type of bus.

An embodiment of the present invention further provides a computer-readable storage medium, configured to store computer software instructions that need to be executed by the processor. The computer software instructions include a program that needs to be executed by the processor.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims of this application and their equivalent technologies.

## Claims

1. A data transmission method, comprising:
receiving indication information, wherein the indication information indicates quasi co-location information of a control channel or a data channel, and the quasi co-location information indicates that the control channel or the data channel has a quasi co-location relationship with a plurality of reference signals;
receiving a control channel or a data channel from a plurality of network devices;
performing Doppler shift estimation based on the quasi co-location information for the plurality of reference signals, to obtain a comprehensive Doppler shift estimation result; and
demodulating the control channel or the data channel based on the comprehensive Doppler shift estimation result.

2. The method according to claim 1, wherein the performing Doppler shift estimation based on the quasi co-location information for the plurality of reference signals comprises:
separately performing Doppler shift estimation on the plurality of reference signals based on the quasi co-location information, to obtain Doppler shift estimation results that respectively correspond to the plurality of reference signals; and
combining the Doppler shift estimation results that correspond to the plurality of reference signals, to obtain the comprehensive Doppler shift estimation result.

3. The method according to claim 1 or 2, wherein the indication information comprises one piece of configuration information indicating the quasi co-location information, the configuration information comprises a reference signal list, and the reference signal list comprises identifiers of the plurality of reference signals.

4. The method according to claim 1 or 2, wherein the indication information comprises a plurality of pieces of configuration information indicating the quasi co-location information, and the plurality of pieces of configuration information are one-to-one associated with the plurality of reference signals.

5. The method according to any one of claims 1 to 4, wherein the plurality of reference signals may comprise at least one of the following: a tracking reference signal TRS and a synchronization signal/broadcast channel block SSB.

6. A data transmission method, comprising:
sending indication information, wherein the indication information indicates quasi co-location information of a control channel or a data channel, and the quasi co-location information indicates that the control channel or the data channel has a quasi co-location relationship with a plurality of reference signals; and
sending a control channel or a data channel to a terminal device based on the quasi co-location information.

7. The method according to claim 6, wherein the indication information comprises one piece of configuration information indicating the quasi co-location information, the configuration information comprises a reference signal list, and the reference signal list comprises identifiers of the plurality of reference signals.

8. The method according to claim 6, wherein the indication information comprises a plurality of pieces of configuration information indicating the quasi co-location information, and the plurality of pieces of configuration information are one-to-one associated with the plurality of reference signals.

9. The method according to any one of claims 6 to 8, wherein the plurality of reference signals may comprise at least one of the following: a tracking reference signal TRS and a synchronization signal/broadcast channel block SSB.

10. A data transmission apparatus, comprising:
a communication unit, configured to: receive indication information, wherein the indication information indicates quasi co-location information of a control channel or a data channel, and the quasi co-location information indicates that the control channel or the data channel has a quasi co-location relationship with a plurality of reference signals; and receive a control channel or a data channel from a plurality of network devices; and
a processing unit, configured to: perform Doppler shift estimation based on the quasi co-location information for the plurality of reference signals, to obtain a comprehensive Doppler shift estimation result; and demodulate the control channel or the data channel based on the comprehensive Doppler shift estimation result.

11. The apparatus according to claim 10, wherein when performing Doppler shift estimation based on the quasi co-location information for the plurality of reference signals, to obtain a comprehensive Doppler shift estimation result, the processing unit is specifically configured to:
separately perform Doppler shift estimation on the plurality of reference signals based on the quasi co-location information, to obtain Doppler shift estimation results that respectively correspond to the plurality of reference signals; and
combine the Doppler shift estimation results that correspond to the plurality of reference signals, to obtain the comprehensive Doppler shift estimation result.

12. The apparatus according to claim 10 or 11, wherein the indication information comprises one piece of configuration information indicating the quasi co-location information, the configuration information comprises a reference signal list, and the reference signal list comprises identifiers of the plurality of reference signals.

13. The apparatus according to claim 10 or 11, wherein the indication information comprises a plurality of pieces of configuration information indicating the quasi co-location information, and the plurality of pieces of configuration information are one-to-one associated with the plurality of reference signals.

14. The apparatus according to any one of claims 10 to 13, wherein the plurality of reference signals may comprise at least one of the following: a tracking reference signal TRS and a synchronization signal/broadcast channel block SSB.

15. A data transmission apparatus, comprising:
a communication unit, configured to: send indication information, wherein the indication information indicates quasi co-location information of a control channel or a data channel, and the quasi co-location information indicates that the control channel or the data channel has a quasi co-location relationship with a plurality of reference signals; and
a processing unit, configured to send, by using the communication unit, a control channel or a data channel to a terminal device based on the quasi co-location information.

16. The apparatus according to claim 15, wherein configuration information of the quasi co-location information comprises a reference signal list, and the reference signal list comprises identifiers of the plurality of reference signals.

17. The apparatus according to claim 15, wherein the indication information comprises a plurality of pieces of configuration information indicating the quasi co-location information, and the plurality of pieces of configuration information are one-to-one associated with the plurality of reference signals.

18. The apparatus according to any one of claims 15 to 17, wherein the plurality of reference signals may comprise at least one of the following: a tracking reference signal TRS and a synchronization signal/broadcast channel block SSB.

19. A computer-readable storage medium, wherein the computer-readable storage medium stores a program or instructions, and when the program or the instructions is or are read and executed by one or more processors, the method according to any one of claims 1 to 5 is implemented, or when the program or the instructions is or are read and executed by one or more processors, the method according to any one of claims 6 to 9 is implemented.

20. A computer program product, wherein when the computer program product runs on a terminal device, the terminal device is enabled to perform the method according to any one of claims 1 to 5, or
when the computer program product runs on a network device, the network device is enabled to perform the method according to any one of claims 6 to 9.

21. A communication apparatus, comprising a processor and a communication interface, wherein the communication interface is configured to receive computer program code or instructions and transmit the computer program code or the instructions to the processor, and the processor runs the computer program code or the instructions, so that the communication apparatus implements the method according to any one of claims 1 to 9.
